(19) Europäisches Patentamt
European Patent Office
Office européen des brevets

(11) EP 1 905 798 A2

(12) EUROPEAN PATENT APPLICATION

(43) Date of publication:
**02.04.2008 Bulletin 2008/14**

(51) Int Cl.:
***C08L 23/04*** *(2006.01)*

(21) Application number: **08100008.5**

(22) Date of filing: **14.03.2002**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK YU**

(30) Priority: **14.03.2001 JP 2001072179**
**30.03.2001 JP 2001098857**

(62) Document number(s) of the earlier application(s) in accordance with Art. 76 EPC:
**02005363.3 / 1 241 220**

(71) Applicant: **Sumitomo Chemical Company, Limited**
**Chuo-ku**
**Osaka 541-8550 (JP)**
Designated Contracting States:
**DE FR GB IT NL**

(72) Inventors:
- **Takata, Atsuhiro**
**Toyonaka-shi Osaka 561-0802 (JP)**
- **Kuroda, Ryuma**
**Ibaraki-shi Osaka 567-0841 (JP)**
- **Hanada, Satoshi**
**Ibaraki-shi Osaka 567-0845 (JP)**
- **Yamada, Takeshi**
**Takatsuki-shi Osaka 569-1147 (JP)**

(74) Representative: **Vossius & Partner**
**Siebertstrasse 4**
**81675 München (DE)**

Remarks:
This application was filed on 02 01 2008 as a divisional application to the application mentioned under INID code 62.

# (54) Process for preparing a composition for preparing a polyolefin series resin film and process for preparing the film

(57) The polyolefin [A] has a weight average molecular chain length of 2850nm or longer and a density ρ1 (g/$cm^3$), the polyolefin wax [B] has a weight average molecular weight of 700-6000 and a density ρ2 (g/$cm^3$), the polyolefin and the polyolefin wax are incorporated at [A]/[B]=90/10-50/50 (ratio by weight), and the densities ρ1 and ρ2 satisfy the following conditions: $0.92 \leq \rho 1 \leq 0.94$, $0.91 \leq \rho 2 \leq 0.93$, $-0.03 \leq (\rho 1-\rho 2) \leq 0.03$.

EP 1 905 798 A2

## Description

The present invention relates to a polyolefin series resin, more particularly, a polyolefin series resin film, a composition for preparing the same, a process for preparing the composition, a process for preparing the film, and an apparatus for preparing the composition and the film.

As one of materials for high strength and high elasticity films, ultra-high molecular-weight-polyolefin is known. This ultra-high molecular-weight-polyolefin has high melt viscosity due to its high molecular weight, and film formation such as thinning and drawing is difficult. For that reason, commercially available ultra-high molecular-weight-polyolefin films are generally prepared by a method which includes slicing a block-like resin.

However, although a film can be obtained by slicing ultra-high molecular-weight-polyolefin, the thickness precision is deteriorated, a part having the low strength and elasticity is locally generated and, thus, it is difficult to prepare a high strength and high elasticity film.

An object of the present invention is to provide a high strength and high elasticity polyolefin series resin film as well as a composition for preparing a high strength and high elasticity polyolefin series resin film.

Another object of the present invention is to provide a screw kneading apparatus for preparing a resin composition having high elasticity which hardly produces defects such as hole and breakage when molded into a film and drawn, and a process for preparing a composition for preparing a resin film using the same.

These objects could be achieved by using a composition obtained by mixing polyolefin having a specific molecular chain length and polyolefin wax at a specific ratio as well as by using a screw kneading apparatus having a specific screw design.

That is, a polyolefin series resin film of the present invention is characterized in that:
polyolefin [A] having a weight average molecular chain length of 2850 nm or longer and a density ρ1 (g/cm$^3$) and polyolefin wax [B] having a weight average molecular weight of 700-6000 and a density ρ2 (g/cm$^3$) are incorporated at [A]/[B]=90/10-50/50 (ratio by weight) and ρ1 and ρ2 satisfy the following conditions:

$$0.92 \leq \rho 1 \leq 0.94$$

$$0.91 \leq \rho 2 \leq 0.93$$

$$-0.01 \leq (\rho 1 - \rho 2) \leq 0.03.$$

When [A]/[B] exceeds 90/10 processibility is deteriorated. When [A]/[B] is less than 50/50, the physical properties of the resulting film are impaired.

In addition, a composition for preparing a polyolefin series resin film of the present invention is characterized in that:
polyolefin [A] having a weight average molecular chain length of 2850 nm or longer and a density ρ1 (g/cm$^3$) and polyolefin wax [B] having a weight average molecular weight of 700-6000 and a density ρ2 (g/cm$^3$) are incorporated at [A]/[B]=90/10-50/50 (ratio by weight) and ρ1 and ρ2 satisfy the following conditions:

$$0.92 \leq \rho 1 \leq 0.94$$

$$0.91 \leq \rho 2 \leq 0.93$$

$$-0.01 \leq (\rho 1 - \rho 2) \leq 0.03.$$

Further, a screw kneading apparatus of the present invention comprises:

a barrel,
a screw, said screw being provided in the barrel and being provided with at least a full flight screw and a kneading block and having L/D of 30 or larger, wherein the kneading block has $L_n$/D of 5 or larger, and the full flight screw has $L_f$/D of 3 or larger and satisfies the following equations:

$$35 \leq \alpha \leq 60$$

$$0.15 \leq (M/D) \leq 0.25,$$

wherein α is the flight angle (°) of the full flight screw, M is the depth (mm) of the screw groove of the full flight screw, L is the screw full length (mm), $L_n$ is the total length (mm) of the kneading block, $L_f$ is the total length (mm) of the full flight screw and D is the diameter (mm) of the barrel.

A process for preparing a resin composition of the present invention comprises kneading 100 parts by weight of a mixed resin satisfying the following conditions and 10-300 parts by weight of an inorganic filler using a screw kneading apparatus having the aforementioned essential features.

That is, the ratio by weight of polyolefin [A] having a weight average molecular chain length of 2850nm or larger to polyolefin wax [B] having a weight average molecular weight 700-6000 [A]/[B] is 50/50-90/10.

In the case of a general kneading apparatus which is used for kneading a thermoplastic resin, it was difficult to knead the polyolefin [A] and the polyolefin wax [B] uniformly at the aforementioned ratio. However, by using a screw kneading apparatus of the present invention, a mixed resin obtained by incorporating at the aforementioned ratio can be uniformly kneaded.

By performing kneading under such conditions, a resin composition having high elasticity can be obtained, this can be converted into a film and can be further drawn to obtain a desired porous film.

As a suitable embodiment of the present invention, there is an embodiment in which the aforementioned mixed resin and the aforementioned inorganic filler are kneaded using the aforementioned kneading apparatus of the present invention under the conditions satisfying the following equation:

$$5\times10^4 \leq [E/(D/1000)^3] \leq 3\times10^5$$

wherein E is the amount (kg/hr) of the resin discharged from the kneading apparatus, and D is the diameter (mm) of the barrel of the kneading apparatus.

By kneading under such the conditions, a resin composition having high elasticity can be obtained. A discharge amount is measured as follows:

(1) Take the resin discharged through the die for 36 seconds.
(2) Measure the weight with an electronic balance.
(3) Convert into the discharge amount (kg/hr) per 1 hour.

Fig.1 is a schematic view showing an example of a process for preparing a polyolefin series resin.

Fig.2 is a view showing the details of a screw of a screw kneading apparatus.

Fig.3 is a view showing the construction of a full flight disc of a screw kneading apparatus.

Fig.4 is a view showing the construction of a kneading disc of a screw kneading apparatus.

Polyolefin [A] in the present invention is characterized in that the weight average molecular chain length is 2850nm (28500Å) or longer. When the weight average molecular chain length is less than 2850nm, entanglement of molecular chains in the polyolefin is insufficient and, when a film is prepared from a composition of the present invention, it is difficult to obtain a high strength and high elasticity film.

Polyolefin wax [B] in the present invention is characterized in that it has a weight average molecular weight of 700-6000. When polyolefin wax having a weight average molecular weight of less than 700 is used in a composition consisting of polyolefin [A] and polyolefin wax[B], both are easily separated, and the polyolefin wax is easily bled out from the composition.

When a polyolefin wax having a weight average molecular weight of greater than 6000 is used, melting viscosity at mixing polyolefin [A] and polyolefin wax [B] becomes higher and it is difficult to obtain a uniform composition. Furthermore, when a film is prepared from the resulting composition, a part having a low strength or elasticity is locally generated and, thus, it is difficult to obtain a high strength and high elasticity film.

The density $\rho1$(g/cm$^3$) of polyolefin [A] and the density $\rho2$ (g/cm$^3$) of polyolefin wax [B] in the present invention are
characterized in that they satisfy the following conditions:

$$0.92 \leq \rho1 \leq 0.94$$

$$0.91 \leq \rho2 \leq 0.93$$

$$-0.01 \leq (\rho1-\rho2) \leq 0.03.$$

When the densities $\rho1$ and $\rho2$ do not satisfy the above conditions, polyolefin [A] and polyolefin wax [B] are incompatible and, when a film is prepared from the present composition, a part having a low strength or elasticity is partially generated. Thus, it is difficult to obtain a high strength and high elasticity film, being not preferable.

Examples of olefins constituting polyolefin [A] used in the present invention include ethylene, propylene, butene and hexene. In particular, it is preferable to use ultra-high molecular-weight-polyethylene or ultra-high molecular-weight-polypropylene.

Examples of polyolefin wax [B] include waxes of polyethylene series resins such as low density polyethylene, linear polyethylene (ethylene-$\alpha$-olefin copolymer) and high density polyethylene, polypropylene series resins such as polypropylene and ethylene-propylene copolymer, poly(4-methylpentene-1), paly(butene-1) and ethylene-vinyl acetate copolymer.

Molecular chain length, weight average molecular chain length, molecular weight and weight average molecular weight of the polyolefin are measured by GPC (gel permeation chromatography), and a mixed ratio (% by weight) of polyolefin in a specific molecular chain length range or a specific molecular weight range can be obtained by integrating a molecular weight distribution curve obtained by GPC measurement.

The composition for preparing a polyolefin series resin film of the present invention may contain various additives or fillers, as necessary. For example, as additives, antioxidants, ultraviolet-absorbing agents, pigments, dyes, inorganic fillers, and organic fillers such as resin fine powders may be contained.

It is preferable that the polyolefin series resin film and the composition for the polyolefin series resin film of the present invention contain 10% by weight or more of a polyolefin series resin having a molecular chain length of 2850nm or longer. Since a polyolefin series resin having a molecular chain length of 2850nm or longer is excellent, in particular, in the strength, when such a resin is contained at 10% by weight or more, more preferably 20% by weight or more, a polyolefin series resin film remarkably excellent in strength can be obtained.

The composition for preparing the polyolefin series resin of the present invention can be obtained by kneading polyolefin [A] and polyolefin wax [B] as a raw material with a kneading apparatus having a high shearing. More particularly, there are exemplified a Banbury mixer, a kneader, a kneading roll, and a screw kneading apparatus used for kneading thermoplastic resins.

When a screw kneading apparatus is used, it is preferable to use an apparatus having a screw of L/D of 30 or greater provided with at least a full flight screw and a kneading block, wherein the kneading block has Ln/D of 5 or greater, the full flight screw has Lf/D of 3 or more, and the following conditional equations are satisfied:

(Conditional equations)

$$35 \leq \alpha \leq 60$$

$$0.15 \leq (M/D) \leq 0.25,$$

wherein $\alpha$ is the flight angle (°) of the full flight screw, M is the depth (mm) of the screw groove of the full flight screw, L is the screw full length (mm), D is the diameter (mm) of the barrel, Ln is the element length (mm) of the kneading block (provided that, when 2 or more kneading blocks are contained in the screw, it means the total of element lengths thereof), Lf is the element length (mm) of the full flight screw (provided that when 2 or more full flight screws are contained in a screw, it means the total of element lengths thereof).

When a screw kneading apparatus is used, it is possible to continuously set a processing step necessary for preparing a film, for example, a calendar processing step and a drawing step after kneading, different from the case where a Banbury mixer or a kneader is used.

According to the previous processing method, when 10-300 parts by weight of an inorganic filler are added to 100 parts by weight of a mixed resin, problems such as melt fracture and formation of rattan blind-like holes are encountered and, thus, films having satisfactory membrane thickness precision can not be obtained. However, according to the present method, films which not only have satisfactory membrane thickness precision but also are excellent in the rigidity can be obtained. When the amount of the inorganic filler to be added is less than 10 parts by weight, the amount is insufficient for improving the rigidity. Even when the filler is added at an amount of above 300 parts by weight, the effects of improving the rigidity are low for an addition amount.

As an inorganic filler, calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, almina, mica, zeolite, glass powders and zinc oxide can be used.

Then, embodiments of the present invention will be explained by way of an example using a screw kneading apparatus as a kneading apparatus.

<Process for preparing a film>

Fig.1 is a schematic view showing a preparation line for preparing a polyolefin series resin film. The present preparation line consists of a kneading step 1, a rolling step 2, a first slitting step 3, a drawing step 4 and a second slipping step 5, in a process order.

In the kneading step 1, a screw kneading apparatus 10 is used, and this kneading apparatus is provided with a first hopper 11 for supplying polyolefin PE1 having an average molecular chain length of 2850nm or longer and polyolefin wax PE2. This kneading apparatus may be provided with a second hopper 12 for supplying an additive such as an inorganic filler. The screw kneading apparatus 10 is provided with a biaxial screw 13, which extrudes a mixed resin supplied from hopper 11 forwards while strongly kneading the resin. The composition for preparing a polyolefin series resin film obtained by kneading is pelletized.

In the rolling step 2, a screw extruding apparatus 20 is used. This apparatus 20 is provided with a hopper 21 for placing pellets of a resin composition obtained by kneading step 1, and screw 22. This apparatus 20 extrudes the resin composition forwards, discharges a bar-like or sheet-like melt resin through die 23, and the resin is rolled with a rolling machine 24 to obtain a film.

In the first slitting step 3, a film obtained in rolling step 2 is cut into 2 pieces in the width direction. For example, 2 films having a width of 300mm are obtained from a film having a width of a 600mm.

In the drawing step 4, the aforementioned film having a width of 300mm is drawn 4-5-times in the width direction under predetermined temperature conditions. Thereby, a polyolefin series resin film drawn in width direction can be obtained.

In the second slitting step 5, the polyolefin series resin film obtained in drawing step 4 is cut into a desired width dimension.

<Construction of the screw of the screw kneading apparatus>

Then, the details of the construction of screw 13 of kneading apparatus 10 suitable for preparing a composition for preparing a polyolefin series resin film of the present invention will be explained. Fig.2 shows the details of screw 13.

The screw 13 is constructed by fixing a part called an element on an axis called a screw axis.

In Fig.2, an element indicated by P is a full flight screw. The full flight screw is a screw segment in which grooves are formed spirally over its full length. An element indicated by DP shows a full flight screw in which deeper grooves than those of a full flight screw indicated by P are formed. By using a full flight screw having such deeper grooves, the residence time of the resin can be extended. A full flight screw has a shape shown in Fig.3 and has usually a role in supplying kneading materials forwards, that is, downstream of the kneading apparatus. In Fig.3, D is the diameter (inner diameter) (mm) of the barrel, Ds is the diameter (mm) of the screw, M is the depth (mm) of the screw groove, $\alpha$ is the flight angle (°) of the screw, H is the distance (mm) between the barrel inner surface and the bottom of the screw groove, and $\sigma$ f is the distance (mm) between the screw flight and the barrel inner surface.

Among the aforementioned parameters, $\alpha$ relates to a speed at which the resin is supplied. As $\alpha$ becomes smaller, the speed at which resin is supplied is slower. As a result, the residence time of the resin becomes longer and, thus, the kneading degree of the resin is improved, provided that when $\alpha$ is too small, the productivity is deteriorated. The magnitude of M is a parameter relating to the speed at which the resin is supplied and the kneading strength.

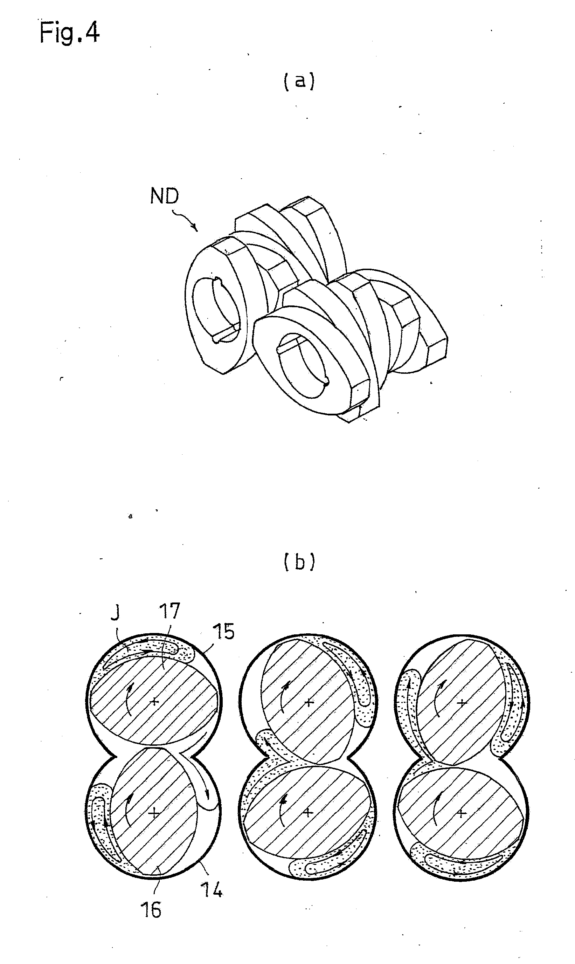

An element indicated by ND is a kneading block. The kneading block has usually such a shape that geometrical centers of a plurality of kneading discs having the same cross-sectional shape are positioned on a common straight line and the discs are piled in a prescribed direction and at a prescribed angle bias around the straight line as shown in Fig.4. Respective kneading discs may have the same or different thickness.

In the state where the screw is provided in the barrel, the distance between the kneading disc constituting the kneading block and the barrel has a distribution, and the strongest shearing force is exerted on the kneading material at a place where that distance becomes the smallest.

An element indicated by LND is a kneading block having such a shape that kneading discs are piled so as to be distorted in a reverse direction to that of the distortion of piling of kneading discs in the kneading block indicated by ND. By using a combination of two kinds of kneading blocks ND and LND, the residence time of the kneading material can be longer as compared with the case of one kind of a kneading block and, thus, a stronger shearing force can be imparted.

An element indicated by symbol SND is also a kneading block. The characteristic thereof is that a kneading disc downstream of the kneading apparatus is thinner than an upstream kneading disc when adjacent kneading discs are compared. By using such the kneading block SND, the flowing rate towards downstream of the kneading material can be adjusted, and a stronger compression and elongation action can be imparted on the kneading material.

Fig. 4(a) and (b) are a view showing a kneading block in the state where it is provided in a biaxial extruder (the screw axis is omitted). Fig.4 (b) shows motion of a resin J accompanied by movements of kneading discs 16 and 17 in barrels 14 and 15.

In a screw kneading apparatus suitable for preparing a composition for preparing a polyolefin series resin film of the present invention, L/D of the whole screw is set at 30 or more, Ln/D of the kneading block is set at 5 or more, and Lf/D of the full flight screw is set at 3 or more. Further, in a full flight screw, parameters are designed so as to be $35 \leq \alpha \leq 60$ and $0.15 \leq (M/D) \leq 0.25$. As L/D grows larger, the residence time becomes longer. Here, Ln is the element length (mm) of the kneading block (provided that, when 2 or more kneading blocks are contained in the screw, it means the total of the element lengths), Lf is the element length (mm) of the full flight screw (provided that, when 2 or more of full flight screws are contained in the screw, it means the total of the element lengths).

By selecting parameters as described above, there can be obtained a polyolefin series resin composition which can afford a high elasticity film by molding into a film.

When a mixed resin and the aforementioned inorganic filler are kneaded using a screw kneading apparatus having the aforementioned construction, kneading is preferably performed under conditions satisfying the following equation:

$$5\times10^4 \leq [E/(D/1000)^3] \leq 3\times10^5$$

wherein E is the amount (kg/hr) of the resin composition discharged from the kneading apparatus, and D is the diameter (mm) of the barrel of the kneading apparatus. Thereby, a resin composition having the high elasticity can be obtained. The discharge amount E is a parameter showing what an amount of resin is extruded forwards in the interior of the barrel in the kneading apparatus.

Although a kneading apparatus of the present invention is most preferably of a biaxial screw comprising two screws composed of the entirely same screw elements, untaxed screw or 3 or more screws may be used as long as the requirements of the present invention are satisfied.

In a kneading apparatus composed of 2 or more screws, a so-called fitting type is the most preferable in which rotation directions of screws are the same, the distance between axial centers is shorter than the sum of largest diameters of screw elements, and a convex and a concave part of each screw element are fitted as shown in Fig. 4. However, a so-called non-fitting type screw format may be used in which rotation directions are the same and the distance between axial centers is larger than the sum of largest diameters of screw elements.

Alternatively, a non-fitting type screw format in which rotation directions of 2 or more screws are different may be used.

The invention is summarized by the following items:

1. A polyolefin series resin film comprising polyolefin and polyolefin wax, characterized in that:

the polyolefin [A] has a weight average molecular chain length of 2850nm or longer and a density ρ1 (g/cm$^3$),
the polyolefin wax [B] has a weight average molecular weight of 700-6000 and a density ρ2 (g/cm$^3$),
the polyolefin and the polyolefin wax are incorporated at [A]/[B]=90/10-50/50 (ratio by weight), and
the densities ρ1 and ρ2 satisfy the following conditions:

$$0.92 \leq \rho 1 \leq 0.94$$

$$0.91 \leq \rho 2 \leq 0.93$$

$$-0.03 \leq (\rho 1 - \rho 2) \leq 0.03.$$

2. The polyolefin series resin film according to item 1, characterized in that the polyolefin is selected from ethylene, propylene, butene, hexene, ultra-high molecular-weight-polyethylene and ultra-high molecular polypropylene, and
the polyolefin wax is selected from waxes of polyethylene series resins such as low density polyethylene, linear polyethylene (ethylene-α-olefin copolymer) and high density polyethylene, polypropylene series resins such as polypropylene and ethylene-propylene copolymer, poly(4-methylpentene-1), poly(butene-1) and ethylene-vinyl acetate copolymer.
3. The polyolefin series resin film according to item 1 or 2, characterized in that the polyolefin series resin is contained at an amount of at least 10% by weight.
4. A composition for preparing a polyolefin series resin film comprising polyolefin and polyolefin wax, characterized in that:

the polyolefin [A] has a weight average molecular chain length of 2850nm or longer and a density ρ1 (g/cm$^3$),
the polyolefin wax [B] has a weight average molecular weight of 700-6000 and a density ρ2 (g/cm$^3$),
the polyolefin and the polyolefin wax are incorporated at [A]/[B]=90/10-50/50 (ratio by weight), and
the densities ρ1 and ρ2 satisfy the following conditions:

$$0.92 \leq \rho 1 \leq 0.94$$

$$0.91 \leq \rho 2 \leq 0.93$$

$$-0.01 \leq (\rho 1 - \rho 2) \leq 0.03.$$

5. The composition for preparing a polyolefin series resin film according to item 4. characterized in that the polyolefin is selected from ethylene, propylene, butene, hexene, ultra-high molecular-weight-polyethylene and ultra-high molecular polypropylene, and
the polyolefin wax is selected from waxes of polyethylene series resins such as low density polyethylene, linear polyethylene (ethylene-α-olefin copolymer) and high density polyethylene, polypropylene series resins such as polypropylene and ethylene-propylene copolymer, poly(4-methylpentene-1), poly(butene-1) and ethylene-vinyl acetate copolymer.
6. The composition for preparing a polyolefin series resin film according to item 4 or 5, characterized in that
the polyolefin series resin is contained at an amount of at least 10% by weight.
7. A process for preparing a composition for preparing a polyolefin series resin film comprising steps of kneading a polyolefin series resin composition, using a screw kneading apparatus, characterized in that
the polyolefin series resin composition satisfies the following conditions:

polyolefin [A] having a weight average molecular chain length of 2850nm or longer and a density ρ1 (g/cm$^3$), and
polyolefin wax [B] having a weight average molecular weight of 700-6000 and a density ρ2 (g/cm$^3$) are incorporated at [A]/[B] =90/10-50/50 (ratio by weight), and
the densities ρ1 and ρ2 satisfy the following conditions:

$$0.92 \leq \rho 1 \leq 0.94$$

$$0.91 \leq \rho 2 \leq 0.93$$

$$-0.01 \leq (\rho 1-\rho 2) \leq 0.03.$$

8. A process for preparing a composition for preparing a polyolefin series resin film comprising steps of kneading 100 parts by weight of a mixed resin and 10-300 parts by weight of an inorganic filler using a screw kneading apparatus, characterized in that:

the mixed resin satisfies the following conditions:
polyolefin [A] having a weight average molecular chain length of 2850nm or longer, and
polyolefin wax [B] having a weight average molecular weight 700-6000 are incorporated at [A]/[B]=90/10-50/50 (ratio by weight).

9. The process for preparing a composition for preparing a polyolefin series resin film according to item 8, characterized in that:

the mixed resin and the inorganic filler are kneaded under conditions satisfying the following equation:

$$5\times10^{4} \leq [E/(D/1000)^{3}] \leq 3\times10^{5}$$

wherein E is the amount (kg/hr) of the resin composition discharged from the kneading apparatus, and D is the diameter (mm) of the barrel of the kneading apparatus.

10. The process for preparing a composition for preparing a polyolefin series resin film according to item 8 or 9, characterized in that:

the inorganic filler is 1 or 2 or more kinds selected from calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolite, glass powders and zinc oxide.

11. The process for preparing a composition for preparing a polyolefin series resin film according to any one of items 8-10, characterized in that:

the screw kneading apparatus comprises:
a barrel, and
a screw,
said screw being provided in the barrel, being provided with at least a full flight screw and a kneading block, and having L/D of 30 or more, wherein the kneading block has $L_n/D$ of 5 or more, the full flight screw has $L_f/D$ of 3 or more, and satisfies the following equation:

$$35 \leq \alpha \leq 60$$

$$0.15 \leq (M/D) \leq 0.25$$

wherein $\alpha$ is the flight angle (°) of the full flight screw, M is the depth (mm) of the screw groove of the full flight screw, L is the screw full length (mm), $L_n$ is the total length (mm) of the kneading block, $L_f$ is the total length (mm) of the full flight screw, D is the diameter (mm) of the barrel.

12. A process for preparing a polyolefin series resin film comprising steps of :

kneading a polyolefin series resin composition using a screw kneading apparatus,
rolling the kneaded polyolefin series resin composition, and
drawing the rolled polyolefin series resin composition,

characterized in that:

the polyolefin series resin composition satisfies the following conditions:
polyolefin [A] having a weight average molecular chain length of 2850nm or longer and a densityp1 (g/cm$^3$), and
polyolefin wax [B] having a weight average molecular weight of 700-6000 and a density ρ2 (g/cm$^3$) are incorporated at [A]/[B]=90/10-50/50 (ratio by weight), and
the densities ρ1 and ρ2 satisfy the following condition:

$$0.92 \leq \rho 1 \leq 0.94$$

$$0.91 \leq \rho 2 \leq 0.93$$

$$-0.01 \leq (\rho 1-\rho 2) \leq 0.03.$$

13. A process for preparing a polyolefin series resin film comprising steps of:

kneading 100 parts by weight of a mixed resin and 10-300 parts by weight of an inorganic filler using a screw kneading apparatus,
rolling the kneaded polyolefin series resin composition, and
drawing the rolled polyolefin series resin composition,

characterized in that:

the mixed resin satisfies the following conditions:
polyolefin [A] having a weight average molecular chain length of 2850nm and
polyolefin wax [B] having a weight average molecular weight of 700-6000 are incorporated at [A]/[B]=90/10-50/50 (ratio by weight).

14. The process for preparing a polyolefin series resin film according to item 13, characterized in that:

the mixed resin and the inorganic filler are kneaded under the conditions satisfying the following equation:

$$5\times10^4 \leq [E/(D/1000)^3] \leq 3\times10^5$$

wherein E is the amount (kg/hr) of resin composition discharged from the kneading apparatus, and D is the diameter (mm) of the barrel of the kneading apparatus.

15. The process for preparing a polyolefin series resin film according to item 13 or 14, characterized in that:

the inorganic filler is 1 or 2 or more kinds selected from calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolite, glass powders and zinc oxide.

16. The process for preparing a polyolefin series resin film according to any one of items 13-15, characterized in that:

the screw kneading apparatus comprises:

a barrel, and
a screw,
said screw being provided in the barrel, being provided with at least a full flight screw and a kneading block, and having L/D of 30 or more,
wherein the kneading block has $L_n/D$ of 5 or more,
the full flight screw has $L_f/D$ of 3 or more, and satisfies the following equations:

$$35 \leq \alpha \leq 60$$

$$0.15 \leq (M/D) \leq 0.25$$

wherein $\alpha$ is the flight angle (°) of the full flight screw, M is the depth (mm) of the screw groove of the full flight screw, L is the screw full length (mm), $L_n$ is the total length (mm) of the kneading block, $L_f$ is the total length (mm) of the full flight screw, D is the diameter (mm) of the barrel.

17. A screw kneading apparatus comprising:

a barrel, and
a screw (13), said screw being provided in the barrel, being provided with at least a full flight screw (P) and a kneading block, and having L/D of 30 or more,
wherein the kneading block has $L_n/D$ of 5 or more, characterizing in that:
the full flight screw (P) has $L_f/D$ of 3 or more, and satisfies the following equations:

$$35 \leq \alpha \leq 60$$

$$0.15 \leq (M/D) \leq 0.25$$

wherein $\alpha$ is the flight angle (°) of the full flight screw, M is the depth (mm) of the screw groove of the full flight screw, L is the screw full length (mm), $L_n$ is the total length (mm) of the kneading block, $L_f$ is the total length (mm) of the full flight screw, D is the diameter (mm) of the barrel.

18. The screw kneading apparatus according to item 17, characterizing in that
the kneading block comprises a combination of a plurality of blocks.
19. The screw kneading apparatus according to item 17 or 18, characterizing in that
a kneading disc constituting the kneading block is constructed thinner at upstream side than at downstream side.
20. The screw kneading apparatus according to any one of items 17-19, characterizing in that
the screw (13) consists of 2 or more screws.

## Claims

1. A process for preparing a composition for preparing a polyolefin series resin film comprising steps of kneading 100 parts by weight of a mixed resin and 10-300 parts by weight of an inorganic filler using a screw kneading apparatus, **characterized in that**:

   the mixed resin satisfies the following conditions:
   polyolefin [A] having a weight average molecular chain length of 2850nm or longer, and
   polyolefin wax [B] having a weight average molecular weight 700-6000 are incorporated at [A]/[B]=90/10-50/50 (ratio by weight).

2. The process for preparing a composition for preparing a polyolefin series resin film according to claim 1, **characterized in that**:

   the mixed resin and the inorganic filler are kneaded under conditions satisfying the following equation:

$$5\times10^4 \leq [E/(D/1000)^3] \leq 3\times10^5$$

   wherein E is the amount (kg/hr) of the resin composition discharged from the kneading apparatus, and D is the diameter (mm) of the barrel of the kneading apparatus.

3. The process for preparing a composition for preparing a polyolefin series resin film according to claim 1 or 2, **characterized in that**:

   the inorganic filler is 1 or 2 or more kinds selected from calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolite, glass powders and zinc oxide.

4. The process for preparing a composition for preparing a polyolefin series resin film according to any one of claims 1-3, **characterized in that**:

   the screw kneading apparatus comprises:
   a barrel, and
   a screw,
   said screw being provided in the barrel, being provided

   with at least a full flight screw and a kneading block, and having L/D of 30 or more,
   wherein the kneading block has $L_n/D$ of 5 or more, the full flight screw has $L_f/D$ of 3 or more, and satisfies the following equation:

$$35 \leq \alpha \leq 60$$

$$0.15 \leq (M/D) \leq 0.25$$

   wherein $\alpha$ is the flight angle (°) of the full flight screw, M is the depth (mm) of the screw groove of the full flight screw, L is the screw full length (mm), $L_n$ is the total length (mm) of the kneading block, $L_f$ is the total length (mm) of the full flight screw, D is the diameter (mm) of the barrel.

5. A process for preparing a polyolefin series resin film comprising steps of:

   kneading 100 parts by weight of a mixed resin and 10-300 parts by weight of an inorganic filler using a screw kneading apparatus,
   rolling the kneaded polyolefin series resin composition, and
   drawing the rolled polyolefin series resin composition,

   **characterized in that**:

   the mixed resin satisfies the following conditions:
   polyolefin [A] having a weight average molecular chain length of 2850nm and
   polyolefin wax [B] having a weight average molecular weight of 700-6000 are incorporated at [A]/[B]=90/10-50/50 (ratio by weight).

6. The process for preparing a polyolefin series resin film according to claim 5, **characterized in that**:

   the mixed resin and the inorganic filler are kneaded under the conditions satisfying the following equation:

$$5\times10^4 \leq [E/(D/1000)^3] \leq 3\times10^5$$

   wherein E is the amount (kg/hr) of resin composition discharged from the kneading apparatus, and D is the diameter (mm) of the barrel of the kneading apparatus.

7. The process for preparing a polyolefin series resin film according to claim 5 or 6, **characterized in that**:

the inorganic filler is 1 or 2 or more kinds selected from calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolite, glass powders and zinc oxide.

**8.** The process for preparing a polyolefin series resin film according to any one of claims 5-7, **characterized in that**:

the screw kneading apparatus comprises:

a barrel, and
a screw,
said screw being provided in the barrel, being provided with at least a full flight screw and a kneading block, and having L/D of 30 or more,
wherein the kneading block has $L_n/D$ of 5 or more,
the full flight screw has $L_f/D$ of 3 or more, and satisfies the following equations:

$$35 \leq \alpha \leq 60$$

$$0.15 \leq (M/D) \leq 0.25$$

wherein $\alpha$ is the flight angle (°) of the full flight screw, M is the depth (mm) of the screw groove of the full flight screw, L is the screw full length (mm), $L_n$ is the total length (mm) of the kneading block, $L_f$ is the total length (mm) of the full flight screw, D is the diameter (mm) of the barrel.

Fig. 1

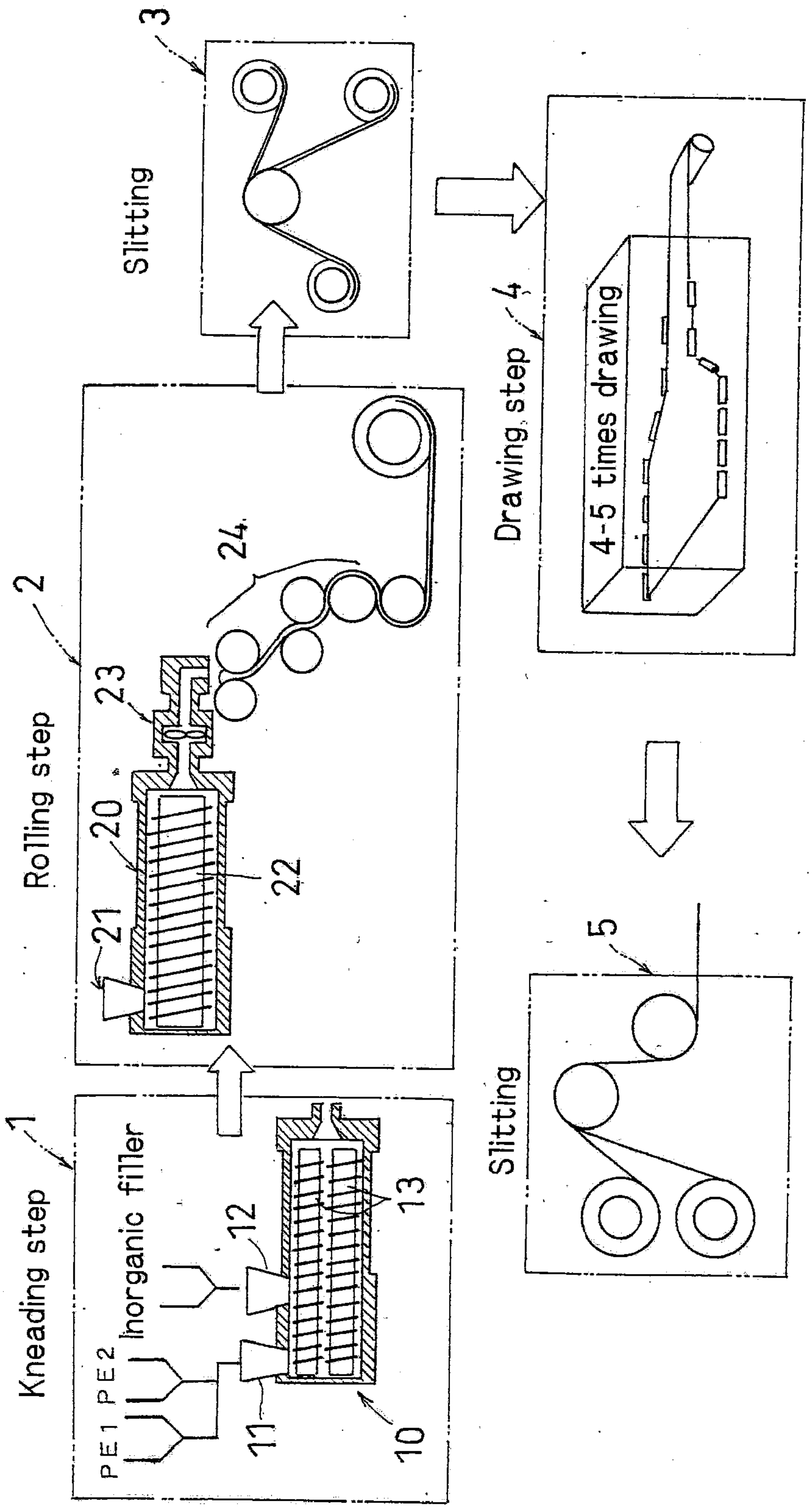
Kneading step
1
PE1
PE2
Inorganic filler
10
11
12
13
Rolling step
2
20
21
22
23
24
Slitting
3
Drawing step
4
4-5 times drawing
Slitting
5

Fig.2

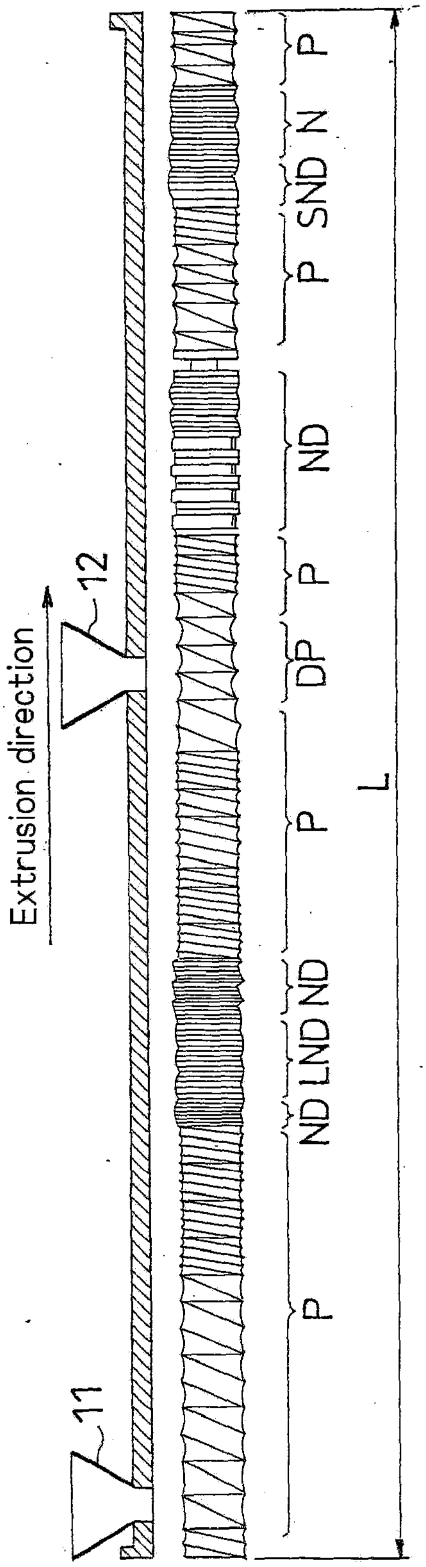

Fig.3

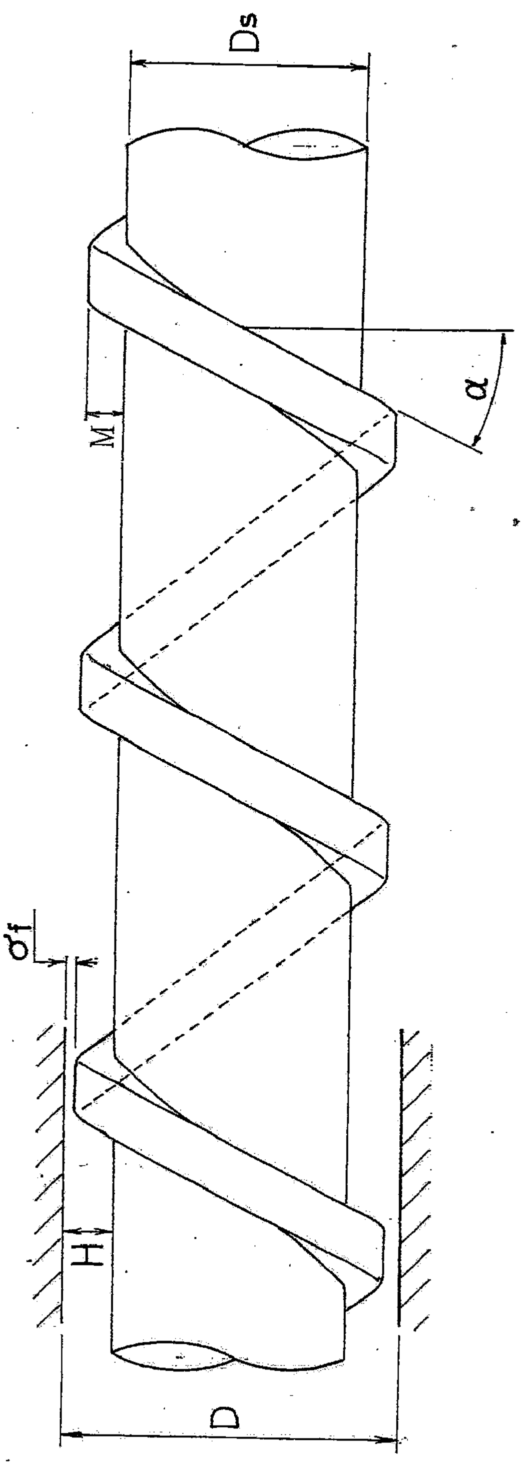

Fig.4

(a)

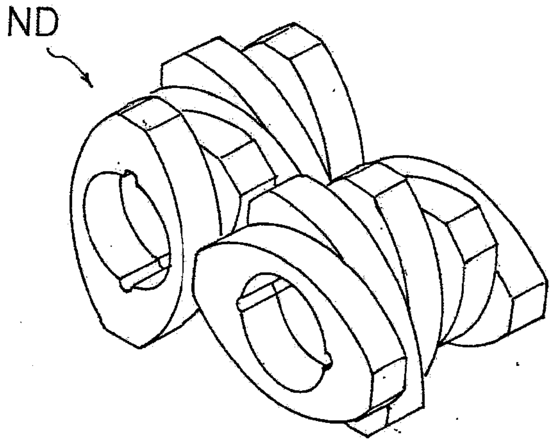


(b)